# EUROPÄISCHE PATENTSCHRIFT

(11) **EP 3 423 633 B1**
(45) Veröffentlichungstag und Bekanntmachung des Hinweises auf die Patenterteilung: **10.09.2025**
(21) Anmeldenummer: 17703025.1
(22) Anmeldetag: 02.02.2017
(51) Int. Cl.: E01B 29/46, E01B 31/12, B23D 79/02, B23K 11/04

(54) **SCHWEISSAGGREGAT UND VERFAHREN ZUM VERSCHWEISSEN VON SCHIENEN EINES GLEISES**
WELDING SET AND METHOD FOR WELDING RAILS OF A RAIL TRACK
ENSEMBLE DE SOUDAGE ET PROCÉDÉ POUR SOUDER DES RAILS D'UNE VOIE FERRÉE

(30) Priorität: 02.03.2016 AT 1072016
(43) Veröffentlichungstag der Anmeldung: 09.01.2019
(73) Patentinhaber: Plasser & Theurer Export von Bahnbaumaschinen Gesellschaft m.b.H., 1010 Wien (AT)
(72) Erfinder: MÜHLLEITNER, Heinz, 3100 Neidling (AT)
(86) Internationale Anmeldenummer: PCT/EP2017/000136
(87) Internationale Veröffentlichungsnummer: WO 2017/148563

(56) Entgegenhaltungen:
- EP-A1- 0 119 820
- EP-B1- 2 315 877
- WO-A1-2015/010630
- GB-A- 2 185 703
- US-A- 3 978 746
- US-A1- 2002 153 354

## Beschreibung

Die Erfindung betrifft ein Schweißaggregat zum Verschweißen von Schienen eines Gleises mit einer - bezüglich einer Vertikalen - eine untere Begrenzung des Schweißaggregates bildenden Aggregat-Unterkante**,** zwei bezüglich einer Schienenlängsrichtung zueinander bewegbaren Aggregatteilen und einer zur Entfernung eines Schweißwulstes vorgesehenen Abschervorrichtung, die aus einem auf einen Schienenkopf auflegbaren Kopfteil, zwei jeweils zueinander bewegbaren Seitenteilen sowie diesen angeschlossenen, in einer Abscherposition zur Anlage an einen Schienenfuß vorgesehenen Schienenfußabschnitten zusammengesetzt ist.

Die Erfindung betrifft außerdem ein Verfahren zum Verschweißen von Schienen eines Gleises und anschließender Abscherung eines Schweißwulstes durch eine Abschervorrichtung.

Derartige Schweißaggregate zum sogenannten mobilen Abbrennstumpfschweißen sind bereits aus einer Vielzahl von Veröffentlichungen in verschiedenen Ausführungen bekannt geworden, wie beispielsweise durch EP 2 315 877 oder GB 2 185 703 A.

Ein weiteres Schweißaggregat ist durch EP 0 132 227 B1 bekannt, bei dem zwei Aggregatteile durch einen Kniehebel miteinander verbunden sind. Die Verschiebezylinder sind an einem Querträger befestigt, an dem Klemmantriebe zum Erfassen der Schiene vorgesehen sind.

Durch US 3 978 746 ist eine Abschervorrichtung zum Entfernen eines Schweißwulstes näher beschrieben. Die beiden Seitenteile werden zur Abscherung durch Zusammenschwenken an die Schiene angelegt. US 2002/0153354 A1 zeigt eine manuell zu positionierende Abschervorrichtung mit einem Kopfteil und zwei asymmetrischen Seitenteilen, von denen nur einer einen Schienenfußabschnitt aufweist. Ein weiteres Schweißaggregat mit integrierter Abschervorrichtung ist aus EP 0 119 820 A1 bekannt.

Die Aufgabe der vorliegenden Erfindung liegt nun in der Schaffung eines Schweißaggregates bzw. Verfahrens der eingangs genannten Art, mit dem ein verbesserter Schweißvorgang möglich ist.

Diese Aufgabe wird erfindungsgemäß mit einem Schweißaggregat bzw. Verfahren der gattungsgemäßen Art durch die im Kennzeichen von Anspruch 1 bzw. 2 angeführten Merkmale gelöst.

Mit der Höhenverstellbarkeit des Schienenfußabschnittes bzw. der gesamten Abschervorrichtung ist es möglich, ein speziell ausgebildetes Schweißaggregat mit einer in bezug auf dessen Schienenklemmbacken lediglich geringfügig distanzierten Aggregat-Unterkante einzusetzen. Dies hat den besonderen Vorteil, dass für den Schweißvorgang die beiden Schienenenden unter Vermeidung nachteiliger Spannungen lediglich geringfügig bzw. überhaupt nicht von den Schwellen abzuheben sind.

Da die Abschervorrichtung bezüglich des unteren Abschnittes über die Aggregat-Unterkante angehoben ist, ergeben sich auch dann keine Probleme, wenn die Abschervorrichtung während des Schweißvorganges zufällig oberhalb einer Schwelle zu liegen kommt. Für den abschließenden Abschervorgang ist lediglich ein geringfügiges Anheben des Schweißaggregates mitsamt der verschweißten Schiene erforderlich, um anschließend den Schienenfußabschnitt problemlos in die Abscherposition absenken und einschwenken zu können. Infolge der bereits durchgeführten Verschweißung sind die aus der notwendigen Anhebung für die Wulstabscherung resultierenden Schienenspannungen nicht mehr problematisch.

Weitere Vorteile der Erfindung ergeben sich aus der Zeichnungsbeschreibung.

Im Folgenden wird die Erfindung anhand von in der Zeichnung dargestellten Ausführungsbeispielen näher beschrieben. Es zeigen: Fig. 1 eine Seitenansicht eines Schweißaggregates mit einer Abschervorrichtung für einen Schweißwulst, Fig. 2 , 3 jeweils eine vergrößerte Ansicht der Abschervorrichtung in einer Schienenlängsrichtung und Fig. 4 eine schematisch vereinfachte Variante der Abschervorrichtung.

Ein bereits in verschiedensten Ausführungen bekanntes Schweißaggregat 1 besteht im Wesentlichen aus zwei bezüglich einer Schienenlängsrichtung 2 zueinander bewegbaren, jeweils an eine Schiene 3 anlegbare Klemmbacken 4 aufweisenden Aggregatteilen 5. Diese weisen als - bezüglich einer Vertikalen - untere Begrenzung eine Aggregat-Unterkante 6 auf, die hier in einer speziellen konstruktiven Ausführung nur geringfügig von den Klemmbacken 4 distanziert ist. Zwischen den beiden Aggregatteilen 5 ist eine zum Abscheren eines Schweißwulstes vorgesehene Abschervorrichtung 7 angeordnet.

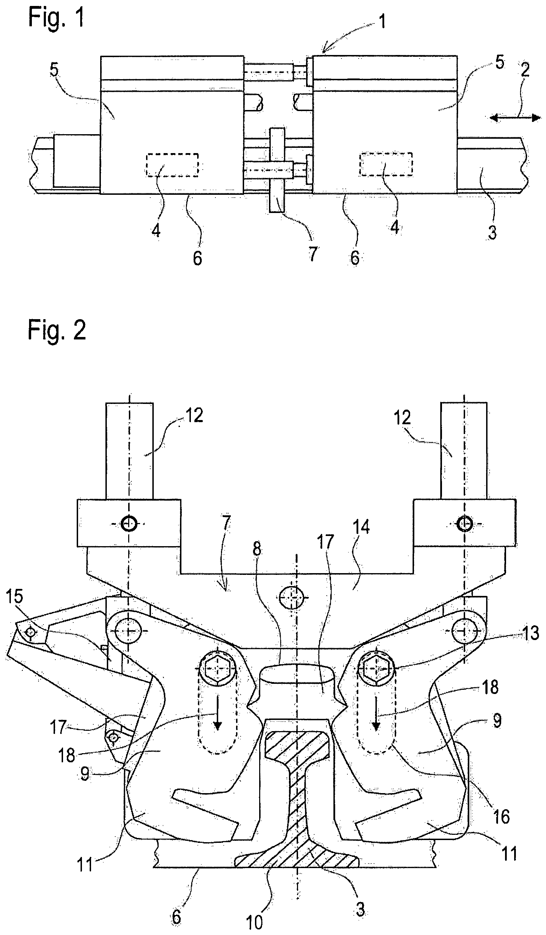

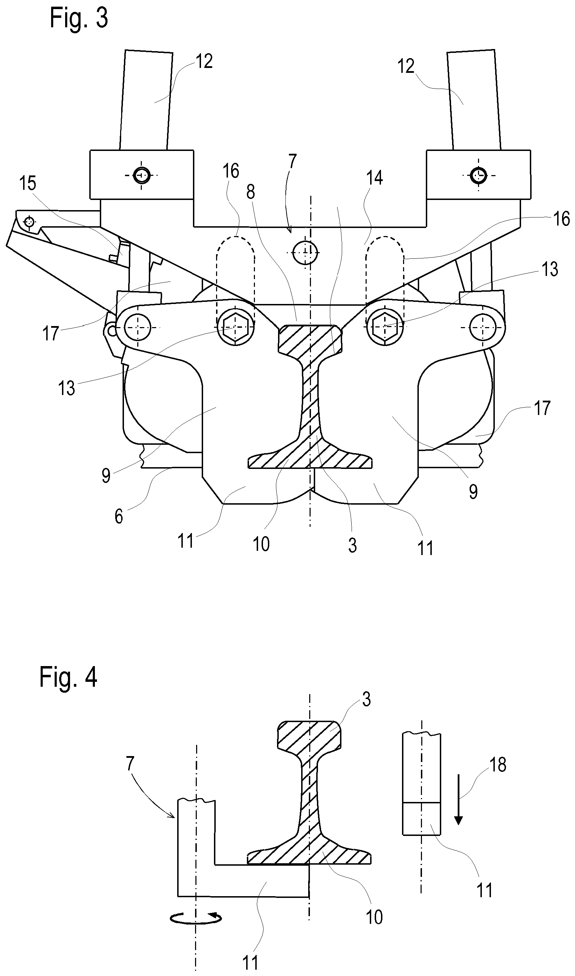

Wie in Fig. 2 und 3 ersichtlich, ist die Abschervorrichtung 7 aus einem auf einen Schienenkopf auflegbaren Kopfteil 8, zwei jeweils zueinander bewegbaren Seitenteilen 9 sowie einem in einer Abscherposition zur Anlage an einen Schienenfuß 10 vorgesehenen Schienenfußabschnitt 11 zusammengesetzt. Die beiden Seitenteile 9 sind mit den angeschlossenen Schienenfußabschnitten 11 durch Verschwenkantriebe 12 um eine Achse 13 zur beidseitigen Anlage an die Schiene 3 verschwenkbar. Die mitsamt den Verschwenkantrieben 12 auf einem Trägerrahmen 14 gelagerte Abschervorrichtung 7 ist durch einen Antrieb 15 in vertikaler Richtung (s. Pfeil 18 in Fig. 2) entlang einer Langlochführung 16 - relativ zu einem Tragkörper 17 bzw. erfindungsgemäß zu den Aggregatteilen 5 - absenkbar.

Der Schweißvorgang wird unter Bildung des Schweißwulstes bei angehobener Abschervorrichtung 7 durchgeführt . Dazu werden die beiden Schienen 3 durch die Klemmbacken 4 erfasst und nach Erwärmung der Schienenenden zusammengepresst. Da dabei die Aggregat-Unterkante 6 infolge einer speziellen Ausbildung des Schweißaggregates 1 etwa auf Höhe des Schienenfußes positioniert ist, kann der Schweißvorgang unter Vermeidung von für die Schweißqualität nachteiligen Schienenspannungen ohne bzw. mit nur geringfügiger Schienenanhebung durchgeführt werden.

Sobald der Schweißvorgang beendet ist, wird das Schweißaggregat 1 mitsamt der nunmehr verschweißten und nach wie vor festgeklemmten Schiene 3 soweit angehoben, dass die Abschervorrichtung 7 auch im Falle einer darunter liegenden Schwelle problemlos abgesenkt werden kann. Durch diese Absenkbewegung gelangen die beiden Schienenfußabschnitte 11 der Abschervorrichtung 7 von einer oberhalb der Aggregat-Unterkante 6 gelegenen Ruheposition (s. Fig. 2) in eine unterhalb der Aggregat-Unterkante 6 gelegene Abscherposition (s. Fig. 3).

In weiterer Folge wird unter Beaufschlagung der beiden Verschwenkantriebe 12 jeder Seitenteil 9 mitsamt dem Schienenfußabschnitt 11 an die Schiene 3 angelegt und der noch glühende Schweißwulst durch eine Bewegung der Abschervorrichtung 7 in Schienenlängsrichtung 2 abgeschert.

Bei einer in Fig. 4 dargestellten Variante der auf die Schienenfußabschnitte 11 reduzierten Abschervorrichtung 7 sind diese unabhängig von den Seitenteilen ausgebildet . Für den Abschervorgang können die beiden Schienenfußabschnitte 11 von einer Ruheposition (s. rechte Hälfte) in eine Arbeitsposition (s. linker Abschnitt) abgesenkt und unterhalb des Schienenfußes 10 in eine Abscherposition eingeschwenkt werden. Die beiden nunmehr ohne Schienenfußabschnitte ausgebildeten Seitenteile müssen lediglich durch Verschwenkung an die Schiene 3 angelenkt werden.

## Patentansprüche

1. Schweißaggregat (1) zum Verschweißen von Schienen (3) eines Gleises mit einer - bezüglich einer Vertikalen - eine untere Begrenzung des Schweißaggregates (1) bildenden Aggregat-Unterkante (6)**,** zwei bezüglich einer Schienenlängsrichtung (2) zueinander bewegbaren Aggregatteilen (5) und einer zur Entfernung eines Schweißwulstes vorgesehenen Abschervorrichtung (7), die aus einem auf einen Schienenkopf auflegbaren Kopfteil (8), zwei jeweils zueinander bewegbaren Seitenteilen (9) sowie einem in einer Abscherposition zur Anlage an einen Schienenfuß vorgesehenen Schienenfußabschnitt (11) zusammengesetzt ist, **dadurch gekennzeichnet, dass** die gesamte Abschervorrichtung (7) höhenverstellbar ausgebildet ist, dass die Abschervorrichtung (7) zusammen mit für eine Verschwenkung der Seitenteile (9) mit angeschlossenen Schienenfußabschnitten (11) vorgesehenen Verschwenkantrieben (12) durch einen Antrieb (15) in der Weise absenkbar ist, dass der jeweilige Schienenfußabschnitt (11) der Abschervorrichtung (7) durch den Antrieb (15) von einer oberhalb der Aggregat-Unterkante (6) gelegener Ruheposition in eine unterhalb der Aggregat-Unterkante (6) gelegene Abscherposition - relativ zu den Aggregatteilen (5) des Schweißaggregats (1) - absenkbar ist.

2. Verfahren zum Verschweißen von Schienen eines Gleises und anschließender Abscherung eines Schweißwulstes durch eine Abschervorrichtung (7)**,** mit einem Schweißaggregat (1) nach Anspruch 1, **dadurch gekennzeichnet, dass** der Schweißvorgang unter Bildung des Schweißwulstes bei angehobener Abschervorrichtung (7) durchgeführt wird, wonach das Schweißaggregat (1) mitsamt der verschweißten Schiene (3) angehoben, die Abschervorrichtung (7) in die Abscherposition abgesenkt und zum Abscheren des Schweißwulstes an die Schiene (3) angelegt wird.

## Claims

1. A welding unit (1) for welding rails (3) of a track, having a unit lower edge (6) forming a lower boundary of the welding unit (1) - with regard to a vertical - two unit parts (5) which are movable towards one another with regard to a longitudinal direction (2) of the rail and a shearing device (7) provided for removing a weld bead, the shearing device being composed of a head part (8) designed to be placed on a rail head, two side parts (9) movable towards one another in each case, and a rail base section (11) provided for being applied to a rail base when in a shearing position, **characterized in that** the entire shearing device (7) is designed to be vertically adjustable, that the shearing device (7) is designed to be lowered together with pivot drives (12) provided for a pivoting of the side parts (9) and the attached rail base sections (11) by means of a drive (15) in this way that the rail base section (11) of the shearing device (7) is designed to be lowered - relative to the unit parts (5) of the welding unit (1) - by means of the drive (15) from a rest position situated above the unit lower edge (6) into a shearing position situated below the unit lower edge (6).

2. A method for welding rails of a track and subsequently shearing off a weld bead by means of a shearing device (7) with a welding unit (1) according to claim 1, **characterized in that** the welding operation with formation of the weld bead is carried out with the shearing device (7) being raised, after which the welding unit (1) together with the welded rail (3) is raised, the shearing device (7) is lowered into the shearing position and applied to the rail (3) for shearing off the weld bead.

## Revendications

1. Module de soudage (1) pour le soudage de rails (3) d'une voie ferrée avec une arête inférieure de module verticale (6) formant une limite inférieure du module de soudage (1), deux parties de modules (5) mobiles l'une par rapport à l'autre par rapport à une direction longitudinale de rail (2) et un dispositif de cisaillement (7) prévu pour l'élimination d'un cordon de soudure qui est composé d'une partie de tête (8) pouvant être appuyée sur un champignon de rail, de deux parties latérales (9) à chaque fois mobiles l'une par rapport à l'autre ainsi que d'une section de patin de rail (11) prévue dans une position de cisaillement pour l'appui sur un patin de rail, **caractérisé en ce que** le dispositif de cisaillement entier (7) est réalisé de manière réglable en hauteur, **que** le dispositif de cisaillement (7) peut être abaissé conjointement à des entraînements pivotants (12) prévus pour un pivotement des parties latérales (9) avec des sections de patin de rail raccordées (11) par un entraînement (15) de telle sorte que la section de patin de rail respective (11) du dispositif de cisaillement (7) peut être abaissée par l'entraînement (15) d'une position de repos située au-dessus de l'arête inférieure de module (6) à une position de cisaillement située en dessous de l'arête inférieure de module (6) par rapport aux parties de module (5) du module de soudage (1).

2. Procédé de soudage de rails d'une voie ferrée et cisaillement subséquent d'un cordon de soudure par un dispositif de cisaillement (7), avec un module de soudage (1) selon la revendication 1, **caractérisé en ce que** le processus de soudage est réalisé en formant le cordon de soudure en cas de dispositif de cisaillement soulevé (7), suite à quoi le module de soudage (1) est soulevé avec le rail soudé (3), le dispositif de cisaillement (7) est abaissé dans la position de cisaillement et appuyé sur le rail (3) pour le cisaillement du cordon de soudure.
